# EUROPÄISCHE PATENTSCHRIFT

(11) **EP 0 935 731 B1**
(45) Veröffentlichungstag und Bekanntmachung des Hinweises auf die Patenterteilung: **12.04.2000**
(21) Anmeldenummer: 97947722.1
(22) Anmeldetag: 28.10.1997
(51) Int. Cl.: F23B 7/00, F23B 5/04, F23B 1/14

(54) **VERGASERHEIZKESSEL FÜR FESTE BRENNSTOFFE, INSBESONDERE FÜR HOLZ**
HEATING BOILER FOR SOLID FUELS, SPECIALLY TIMBER
CHAUDIERE DE CHAUFFAGE POUR COMBUSTIBLES SOLIDES, NOTAMMENT LE BOIS

(30) Priorität: 29.10.1996 DE 19646525
(43) Veröffentlichungstag der Anmeldung: 18.08.1999
(73) Patentinhaber: Herlt, Christain, 17194, Vielist (DE)
(72) Erfinder: HERLT, Christian, D-17194 Vielist (DE); HAKER, Detlef, D-17217 Mollenstorf (DE)
(74) Vertreter: Fleischer, Harald
(86) Internationale Anmeldenummer: DE9702575
(87) Internationale Veröffentlichungsnummer: WO9819108

(56) Entgegenhaltungen:
- EP-A- 0 563 499
- CH-A- 194 401
- DE-A- 19 531 821
- DE-U- 9 001 477
- FR-A- 2 589 988

## Beschreibung

Die Erfindung betrifft einen Vergaserheizkessel für die Verbrennung von Festbrennstoffen für die Raumheizung gemäß dem Oberbegriff des Anspruchs 1. Ein solcher Kessel ist aus Dokument CH-A-194 401 schon bekannt. Besonders geeignet ist dieser für die Verbrennung von grobstückigem Holz.

Das Prinzip der Brennstoffvergasung in einem Feuerraum und der Nachverbrennung in einem gesonderten Brennraum besitzt für gasreiche Festbrennstoffe, wie Holz, wesentliche Vorteile. Eine weitgehende saubere Verbrennung und damit geringe Umweltbelastung und eine hohe Energieausbeute sind die hauptsächlichen Vorteile.

Die bekannten Ausführungen bestehen aus einem geschlossenen Brennstofffüllraum mit Fülltür, einer unteren Abbrand- und Vergasungszone, einer Brenndüse mit einer dahinterliegenden Brennkammer, Luftzuführungen und Wärmetauscher. Zur Verbesserung der Verbrennung sind besondere Luft- und Brenngasführungen vorgeschlagen worden.

Entsprechend der DE OS 3411822 hat der Füllschacht die Form eines Doppelkegels mit Gasabströmoffnungen und einen Brennringkanal in der Erweiterung. Damit soll ein gleichmäßiger Abbrand und einfacher Aufbau erreicht werden. In der mittleren Zone ist der Abbrand aber nicht gesichert, wodurch Brückenbildungen auftreten können, außerdem entsteht ein Verbrennungsraum mit großer Wand- bzw. Oberfläche.

In der DE PS 3617146 wird eine spezielle Luftzuführung für die Primärluft vorgeschlagen, um eine gute Brenngas-Luftmischung zu erreichen. Das Gebläse ist auf der Fülltür montiert und führt Außenluft in drei Ebenen des Brennstoffschachtes zu.

Die in der DE PS 3718022 vorgeschlagene Lösung enthält zwei Luftzuführungsebenen im Brennstoffschacht und eine zum Brennraum. Mit der Rückführung von Abgas soll eine besonders gute Vergasung erreicht werden. Das erfordert aber eine sorgfältige Dosierung, um den erforderlichen Sauerstoffgehalt zu gewährleisten. Zur Vermeidung von Brennstoffbrücken ist eine besondere schwenkbare Abstützung vorgesehen. Eine spezielle Brennraumform ist durch die DE PS 3737661 bekannt geworden. Diese ist in der Bodenplatte eingeordnet und erfordert deshalb einen hohen Material- und Fertigungsaufwand. Die Primärluft wird nur unmittelbar oberhalb der Bodenplatte zugeführt, wodurch die Brenngasdurchmischung unvollständig bleibt.

Eine sichere Vermeidung von Brücken im Brennstoff und eine optimale Verbrennung bei einfachen technischen Aufbau ist durch diese Lösungen nicht gewährleistet.

In der CH 194 401 ist eine Feuerungseinrichtung für Kessel beschrieben, bei der im unter dem Rost liegenden Nachverbrennungsraum eine etwa horizontale Trennwand angeordnet ist, welche die Rauchgase, die durch eine Austrittsöffnung strömen, zwingt, die Unterseite des Rostes zu bestreichen. Im Bereich der Austrittsöffnung erfolgt die Zufuhr von Sekundärluft.

Die Gestaltung der Trennwand als ebene Platte führt im Einbauzustand zu Zugspannungen, die bei keramische Teile zu einer deutlichen Herabsetzung der Lebensdauer führen.

Die Zufuhr der Sekundärluft erfolgt im Brennkammerbereich und führ dazu, daß diesem Bereich Wärme entzogen wird, was für den Gesamtprozeß von Nachteil ist.

Aufgabe der Erfindung ist es deshalb, mit einfachen Bauelementen die Luftzuführung, den Brennstoffraum und die Verbrennungszone so zu gestalten, daß ein gleichmäßig verteilter Abbrand, eine gute Zumischung von Sekundärluft, eine stabile Verbrennung bei optimalen Temperaturen und Verweilzeiten in der Brennkammer erreicht werden.

Gelöst wird diese Aufgabe in einem Vergaserheizkessel für Feststoffverbrennung gemäß Anspruch 1.

Mit der Gestaltung des Brennstoff- und Vergasungsraumes wird ein gleichmäßiges Nachrutschen grobstückigen Gutes erreicht. Eine Verbrennung über die ganze Tiefe des Raumes im untersten Bereich unterstützt dieses. Die Reaktion des Brennstoffes mit der zugeführten Primärluft steht in einem Gleichgewicht mit der Strömungsgeschwindigkeit. Die seitlich angeordneten Öffnungen für die Primärluftzufuhr bewirken eine Verteilung der Primärluft im Brennstoffbereich, so daß ein Luftüberschuß vermieden wird. Das ist wiederum Voraussetzung für eine wirtschaftlichste Verbrennung und optimale Abgaswerte. Mit der Gestaltung und Teilung der Brennkammer in eine Vorbrenn- und Mischkammer, eine Nachbrennkammer und zwei Umlenk- und Nachbrennkammern und der Zuführung vorgewärmter Sekundarluft wird eine schrittweise und vollständige Verbrennung des Gasgemisches erzielt. Die Trennwand erreicht dabei durch ihre zentrale Lage hohe Temperaturen, was sich günstig auf den Verbrennungsprozeß auswirkt. Die Erweiterung des Querschnittes der Vorbrenn- und Mischkammer sowie der Nachbrennkammer sorgt für eine Verminderung der Strömungsgeschwindigkeit der Gase und dadurch zum Ausfallen der Asche.

Spezielle Ausgestaltungen der Erfindung sind in den Unteransprüchen dargelegt. Besonders der einfache und gleichzeitig wirkungsvolle Aufbau der Brennkammer aus Feuerbeton-Rohrabschnitten ist eine weitere wesentliche Neuerung.

Nachfolgend wird die Erfindung an einem Beispiel erläutert.
Die Figur 1 zeigt den Vergaserheizkessel in der Seitenansicht im Schnitt.
Die Figur 2 zeigt den Vergaserheizkessel in der Vorderansicht im Schnitt.
Die Figuren 3 - 6 zeigen Einzelheiten des Brennraumes.
Die Figuren 7 und 8 zeigen Einzelheiten der Feuerungsklappe.

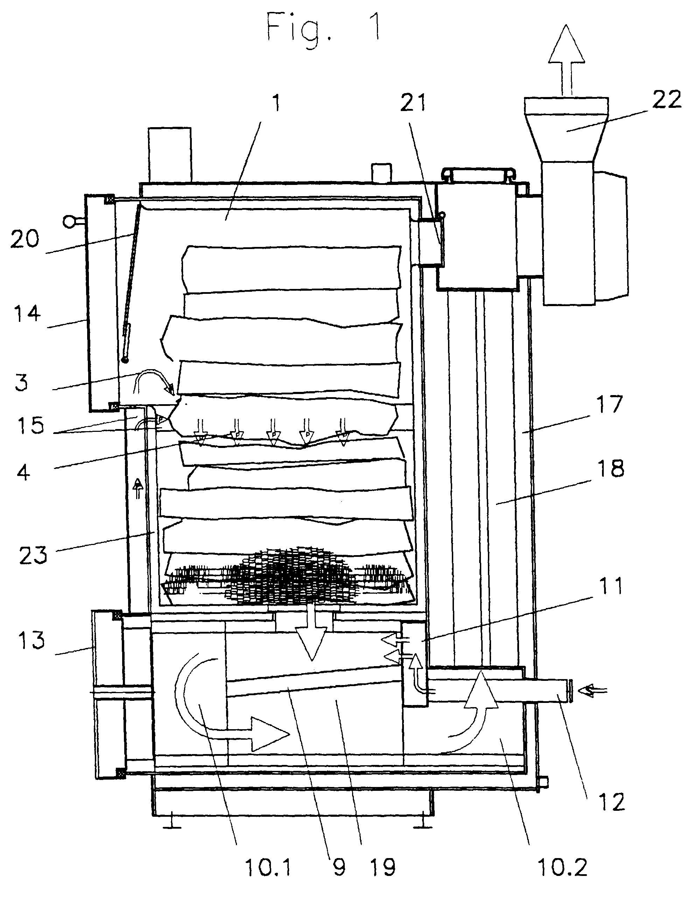

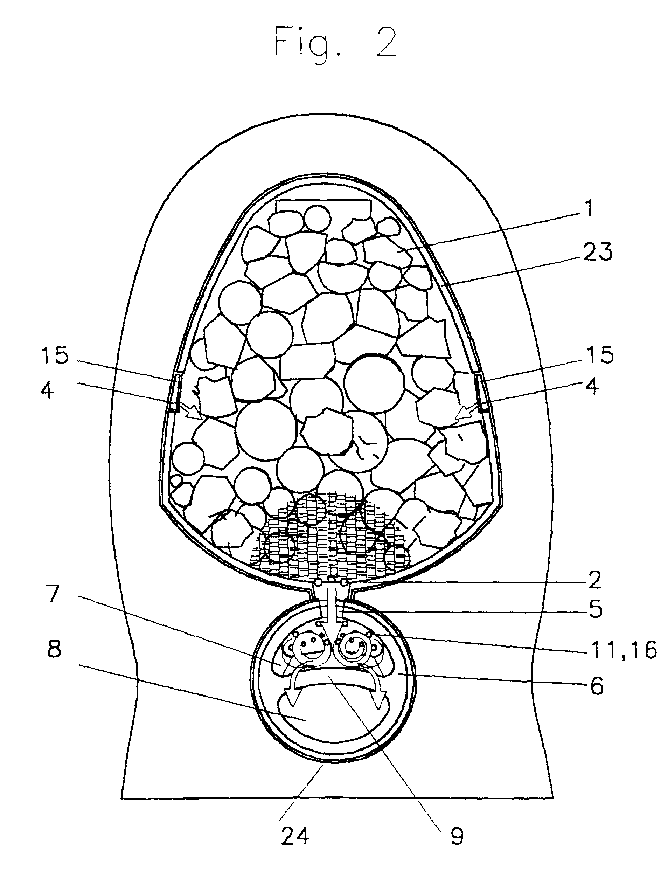

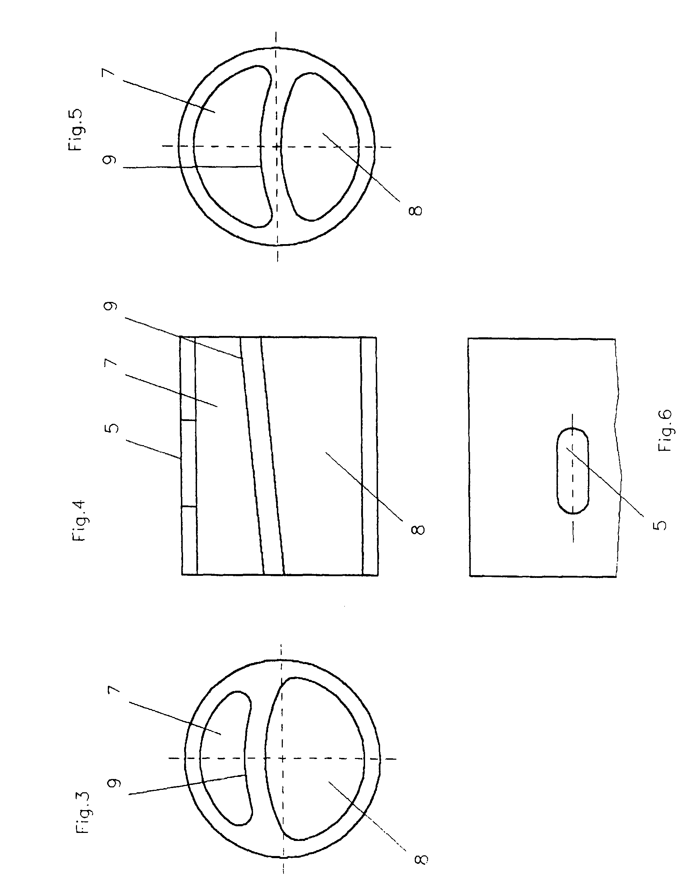

Figur 1 und 2 zeigen den in einem Gehäuse angeordneten Brennstoff- und Vergasungsraum 1 und die darunter befindliche Brennkammer 6. Zwei durch Walzen oder Biegen mit unterschiedlichen Radien und Schenkellängen umgeformten Bleche sind an den Enden zu einem Behälter mit birnenförmigem Querschnitt verbunden. Die Vorder- und Rückseite ist als ebenes Blech ausgeführt. An der Vorderseite des Vergaserheizkessels ist oben eine Fülltür 14 und unten eine Brennkammertür 13 für die Ascheentnahme angeordnet. Der hohe Brennstoff-und Vergasungsraum 1 ermöglicht einen großen Vorrat auch von grobstückigem Brenngut. Mit der gleichmäßigen Erweiterung nach unten ist ein Nachrutschen bis zum Glutbett gesichert. An der unteren Scheitellinie befindet sich mittig ein Längsschlitz im Boden, der sich über ¼ der Länge der Scheitellinie erstreckt. In diesem Schlitz ist ein Rost 2 eingelassen. Über dem Verbindungsbereich der beiden geformten Bleche sind Einlaßöffnungen 4 für die Primärluft in einer Höhe von 0,5 der maximalen Höhe des Brennstoff- und Vergasungsraumes 1 über dem Rost 2 eingelassen. Diese stehen über Kanäle 15 mit der äußeren Primärluftöffnung in Verbindung. Mit der verteilten Zuführung von Verbrennungsluft und dem Rost 2 wird ein stabiles Glutbett und eine vollständige Gasumwälzung sowie ein gleichmäßiger Abbrand über die Tiefe des Brennstoff- und Vergasungsraumes 1 erreicht. Unterhalb des Rostes 2 befindet sich parallel zum Vergasungsraum 1 eine Brennkammer 6, die aus einem oder mehreren Rohrabschnitten 19 aus Feuerbeton oder anderem feuerfesten Material besteht, die in einem Stahlrohr geführt sind. Unter dem Rost 2 befindet sich eine in die Brennkammer 6 führende Öffnung, die als Brenndüse 5 wirkt. Die Brenndüse 5 ist schlitzförmig und parallel zur Achse der Brennkammer 6 gerichtet (Fig. 6). Ihre Länge entspricht in etwa der Länge des Rostes 2 und sie befindet sich etwa unterhalb desselben. Durch die Brenndüse 5 strömt das Brenngas mit hoher Geschwindigkeit in die Vorbrenn- und Mischkammer 7 der Brennkammer 6. Die Brennkammer 6 (Fig. 4) ist durch eine mittig in einem Teil der Rohrabschnitte 19 angeordnete Wand 9 in eine Vorbrenn- und Mischkammer 7 und eine von dieser getrennte darunterliegende Nachbrennkammer 8 geteilt. Der Querschnitt der beiden Kammern 7 und 8 ist jeweils nierenförmig (Fig. 3) und erweitert sich in Strömungsrichtung kontinuierlich (Fig. 5). Beide Kammern 7 und 8 sind durch eine Umlenk- und Nachbrennkammer 10.1 verbunden. Im Anschluß an die Nachbrennkammer 8 befindet sich die Umlenk- und Nachbrennkammer 10.2, durch die wenigstens ein Luftzuführungsrohr 12 für die Sekundärluft zum Luftvorwärmer 11 geführt ist, der im Bereich zwischen der Umlenk- und Nachbrennkammer 10.2 und der Vorbrenn- und Mischkammer 7 angeordnet ist. Aus dem Luftvorwärmer 11 wird die vorgewärmte Sekundärluft durch mindestens eine Luftaustrittsöffnung 16 in die Vorbrenn- und Mischkammer 7 geleitet. In der Vorbrenn- und Mischkammer 7 erfolgt dann die Vermischung der Brenngase mit der Sekundärluft und damit die Einleitung der Verbrennung der Brenngase. Im Wärmetauscher 17, der sich an die Umlenk- und Nachbrennkammer 10.2 anschließt, sind senkrechte Rauchgaszüge 18 angeordnet.

Die Wand 9 ist beidseitig feuerberührt und bewirkt durch ihre hohe Temperatur eine gute Einleitung und Stabilität der Verbrennung. An der Brennkammer 6 ist außer dem Luftvorwärmer 11 für die Vorwärmung der Sekundärluft keine weitere Wärmeableitung vorgesehen. Damit wird eine hohe Verbrennungstemperatur gesichert und aufrechterhalten.

Zwischen den Rohrabschnitten 19 und dem Stahlrohr befindet sich eine Wärmedämmschicht 24, die die Abkühlung der Brennkammer 6 und die Entstehung von schädlichen Wärmespannungen in der Brennkammer und im Stahlkörper verhindert.

Mit Unterstützung eines Saugzuggebläses 22 werden die Rauchgase in den Schornstein geführt.

Wenn Brennstoff nachgelegt werden soll, wird zunächst eine Bypassklappe 21 geöffnet und die Rauchgase werden auf kürzestem Wege aus dem Brennstoff- und Vergasungsraum 1 abgesaugt.

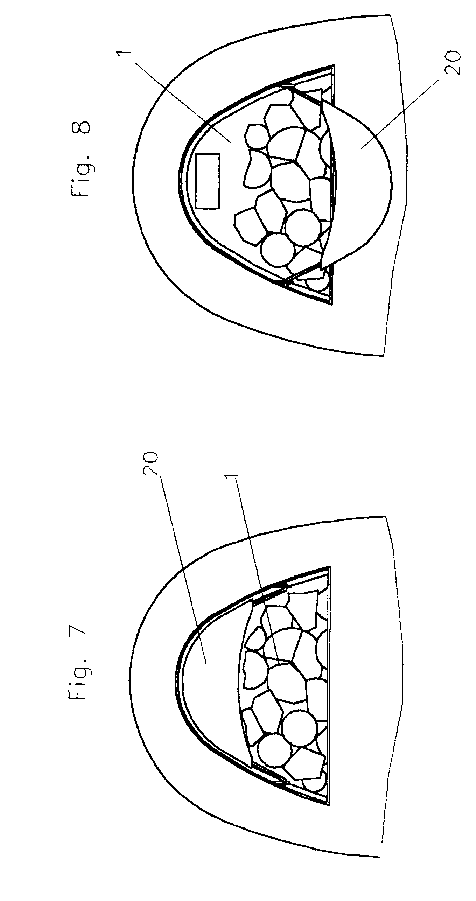

In den Figuren 7 und 8 ist die Beschickungsöffnung bei geöffneter Fülltür 14 dargestellt. Am Rahmen der Beschickungsöffnung ist eine sichelförmige Feuerungsklappe 20 schwenkbar gelagert. Sie verdeckt im geschlossenen Zustand ¹/₃ bis ½ der Beschickungsöffnung. Die Feuerungsklappe 20 erfüllt eine weitere Schutzfunktion beim Beschicken des Brennstoff- und Vergasungsraumes 1. Durch die Reduzierung der Beschickungsöffnung verhindert sie das Austreten von Rauchgasen beim Beschickungsvorgang. Die verbleibende Öffnung der Beschickungsöffnung gestattet weiterhin das Einbringen der Brennstoffe, und wenn der Vergasungs- und Verbrennungsraum 1 bis zur Spitze gefüllt werden soll, kann die Feuerungsklappe abgeklappt werden.

Der gesamte Brennstoff- und Vergasungsraum 1 ist mit Feuerbeton 23 ausgekleidet. Der Brennstoff- und Vergasungsraum 1 und die Brennkammer sind wasserummantelt.

Durch die erfindungsgemäße Lösung werden Brücken im Brennstoff- und Vergasungsraum 1 durch den sich nach unten erweiternden Querschnitt sicher vermieden. Die neuartige Anordnung der einzelnen Elemente des Vergaserheizkessels zueinander, die Gestaltung der Brennkammer und die besondere der Primär- und Sekundärlufteinleitung sichern eine optimale Verbrennung bei einfachem technischen Aufbau.

### Verzeichnis der Bezugszeichen

1 Brennstoff- und Vergasungsraum
2 Rost
3 Primärluftzufuhr oben
4 Primärluftzufuhr seitlich
5 Brenndüse
6 Brennkammer
7 Vorbrenn- und Mischkammer
8 Nachbrennkammer
9 Wand
10.1 Umlenk- und Nachbrennkammer
10.2 Umlenk- und Nachbrennkammer
11 Luftvorwärmer
12 Luftzuführungsrohr für Sekundärluft
13 Brennkammertür
14 Fülltür
15 Kanal für Luftöffnungen für Primärluft
16 Luftöffnung für Sekundärluft
17 Wärmetauscher
18 Rauchgaszüge
19 Rohrabschnitt
20 Feuerungsklappe
21 Bypassklappe
22 Gebläse
23 Feuerbeton
24 Wärmedämmschicht

## Patentansprüche

1. Vergaserheizkessel für feste Brennstoffe, insbesondere für Holz, mit unterem Abbrand, bestehend aus einem mittels einer Fülltür (14) verschließbaren Brennstoff- und Vergasungsraum (1) mit Luftzuführungen, einem Rost (2), Brenndüse (5), einem durch eine angenähert horizontale Wand getrennten Brennraum (6), Wärmetauschflächen (17) und Gebläse (22), dadurch gekennzeichnet, daß
• der Brennstoff- und Vergasungsraum (1) einen birnenförmigen vertikalen Querschnitt besitzt und der Rost (2) sich schlitzförmig über einen Teil der unteren Scheitellinie des Brennstoff- und Vergasungsraumes (1) erstreckt,
• die Öffnungen (4) für die Primärluftzufuhr in einem Bereich von 0,4 bis 0,6 der maximalen Höhe des Brennstoff- und Vergasungsraumes (1) über dem Rost (2) angeordnet sind,
• im Bereich unterhalb des Rostes (2) eine schlitzförmige Brenndüse (5), deren Länge in etwa der Länge des Rostes (2) entspricht, die Verbindung zum Brennraum (6) herstellt,
• der Brennraum (6) durch eine Wand (9) in eine Vorbrenn- und Mischkammer (7), eine darunterliegende Nachbrennkammer (8) mit jeweils nierenförmigem Querschnitt und zwei Umlenk- und Nachbrennkammern geteilt ist, wobei der Querschnitt der beiden Kammern (7) und (8) sich in Strömungsrichtung kontinuierlich vergrößert,
• in die Vorbrenn- und Mischkammer (7) der Luftvorwärmer (11) für die Sekundärluft mündet.

2. Vergaserheizkessel nach Anspruch 1, dadurch gekennzeichnet, daß der Brennstoff- und Vergasungsraum (1) aus zwei kreissegmentförmig bis parabelförmig gebogenen Blechen mit verschiedenen Radien/Steigungen, deren Enden miteinander verbunden sind, und ebenen Vorder- und Rückseiten besteht.

3. Vergaserheizkessel nach den Ansprüchen 1 und 2, dadurch gekennzeichnet, daß der Brennstoff-und Vergasungsraum (1) aus einem ellipsenförmig verformten Rohrabschnitt und ebenen Vorder- und Rückseiten besteht.

4. Vergaserheizkessel nach den Ansprüchen 1 bis 3, dadurch gekennzeichnet, daß in einem Bereich von 0,4 bis 0,6 der maximalen Höhe des Vergasungs- und Brennraumes (1) über dem Rost (2) und parallel zu diesem beidseitig an der inneren Kesselwand je ein Kanal (15) mit einer Reihe von Öffnungen (4) für die primäre Verbrennungsluft angeordnet ist.

5. Vergaserheizkessel nach den Ansprüchen 1 bis 4, dadurch gekennzeichnet, daß die Brennkammer (6) aus einem oder mehreren Rohrabschnitten (19) aus Feuerbeton oder anderem feuerfesten Material besteht, die in ein Stahlrohr eingeschoben sind.

6. Vergaserheizkessel nach Anspruch 5, dadurch gekennzeichnet, daß in einem Rohrabschnitt (19) unterhalb des Rostes (2) ein schlitzförmiger, achsparalleler Wanddurchbruch als Brenndüse (5) ausgebildet ist.

7. Vergaserheizkessel nach den Ansprüchen 1 bis 6, dadurch gekennzeichnet, daß im Bereich zwischen der einen Umlenk- und Nachbrennkammer (10.2) und der Vorbrenn- und Mischkammer (7) ein Luftvorwärmer (11) angeordnet ist, in dem die über wenigstens ein Luftzuführungsrohr (12) zugeführte Sekundärluft vorgewärmt und von dem die Sekundärluft durch mindestens eine Luftaustrittsbohrung (16) in die Vorbrenn- und Mischkammer (7) geführt wird.

8. Vergaserheizkessel nach den Ansprüchen 1 bis 7, dadurch gekennzeichnet, daß gegenüber dem Brennraum (6) im Gehäuse eine Tür (13) angeordnet ist, deren Rückwand eine Wand der einen Umlenk- und Nachbrennkammer (10.1) bildet.

9. Vergaserheizkessel nach den Ansprüchen 1 bis 8, dadurch gekennzeichnet, daß die Beschickungsöffnung der Fülltur (14) durch eine schwenkbare, sichelförmige Feuerungsklappe (20) zu bis zu einem Drittel abdeckbar ist.

10. Vergaserheizkessel nach den Ansprüchen 5 bis 9, dadurch gekennzeichnet, daß zwischen den Rohrabschnitten (19) und dem Stahlrohr eine Wärmedämmschicht (24) angeordnet ist, die die Abkühlung der Brennkammer (6) und die Entstehung von schädlichen Wärmespannungen in der Brennkammer (6) und im Stahlkörper verhindert.

11. Vergaserheizkessel nach den Ansprüchen 1 bis 10, dadurch gekennzeichnet, daß der Rost (2) sich schlitzförmig über etwa ¹/₅ bis ¹/₃ der Länge und in der Mitte der unteren Scheitellinie des Brennstoff- und Vergasungsraumes (1) erstreckt.

## Claims

1. A gasification boiler firing solid fuel, such as wood, with downward firing, comprising a solid-fuel firing and gasification chamber (1) with air inlets, the chamber being locked by a loading door (14), further comprising a grate (2), a burner nozzle (5), a combustion zone (6) separated by an approximately horizontal wall, heat exchangers (17) and an exhauster (22), wherein
- said firing and gasification chamber (1) has a pear-shaped vertical cross-section and the grate (2) extends in a slot over part of the bottom line of the firing and gasification chamber (1),
- said primary air inlets (4) are located at a level from 0.4 to 0.6 of the maximum height of said firing and gasification chamber (1) above said grate (2),
- below said grate (2) a slot-like burner nozzle (5) nearly as long as said grate (2) links said firing and gasification chamber (1) with a combustion zone (6),
- said combustion zone (6) is partitioned by a wall (9) into a precombustion and a mixing chamber (7), a postcombustion chamber (8) lying underneath said chamber (7), each chamber having a kidney-shaped cross section, and two diverting and postcombustion chambers, the cross section of said chambers (7) and (8) continuously increasing in flow direction,
- a secondary air preheater (11) extending into said precombustion and mixing chamber (7).

2. The gasification boiler according to claim 1, wherein said firing and gasification chamber (1) consists of two bent circular-to-parabolic segment-shaped plates with different radii/ gradients which are linked with each other at their ends having even front and rear surfaces.

3. The gasification boiler according to claim 1 and 2, wherein said firing and gasification chamber (1) consists of an elliptically shaped tube portion and even front and rear portions.

4. The gasification boiler according to claim 1 to 3, comprising a conduit portion (15) with a number of primary combustion air inlets (4) on both sides of the inner boiler wall at a level from 0.4 to 0.6 of the maximum height of the firing and gasification chamber (1) above said grate (2) and parallel to it.

5. The gasification boiler according to claim 1 to 4, wherein said combustion chamber (6) consists of one or several tube portions (19) made of fire-resistant concrete or any other fire-proof material inserted into a steel tube.

6. The gasification boiler according to claim 5, comprising a burner nozzle (5) in said tube portion (19) underneath said grate (2) shaped like a slot extending axially parallel to the outer wall of said firing and combustion chamber (1).

7. The gasification boiler according to claim 1 to 6, comprising an air preheater (11) arranged between said diversion and postcombustion chamber (10.2) and said precombustion and mixing chamber (7) where secondary air supplied through at least one air supply pipe (12) is preheated and wherefrom said secondary air is lead through at least one air outlet (16) into said precombustion and mixing chamber (7).

8. The gasification boiler according to claim 1 to 7, characterized in that in the boiler housing opposite to the combustion chamber (6) a door (13) is located the back wall thereof forms said diversion and postcombustion chamber (10.1).

9. The gasification boiler according to claim 1 to 8, comprising a crescent-shaped swivelling flap (20) for covering the opening of said loading door (14) up-to one third.

10. The gasification boiler according to claim 5 to 9, comprising a heat-insulating layer (24) between tube portions (19) and said steel pipe preventing the combustion chamber (6) from cooling down and the development of damaging thermal stress inside the combustion chamber (6) and the steel pipe.

11. The gasification boiler according to claim 1 to 10, wherein said grate (2) extends slot-like in the centre of the bottom-line of said firing and gasification chamber (1) over approximately from one fifth to one third of the length of said bottom-line.

## Revendications

1. Chaudière de chauffage pour combustibles solides, notamment le bois, avec combustion inférieure, composée d'une chambre à combustible et de gazéification (1) pouvant être fermée au moyen d'une porte d'alimentation (14) avec amenées d'air, une grille (2), un brûleur (5), une chambre de combustion (6) séparée par une paroi approximativement horizontale, des surfaces d'échange de chaleur (17) et une soufflante (22), caractérisée en ce que
• la chambre à combustible et de gazéification (1) possède une section transversale verticale piriforme et que la grille (2) s'étend en forme de fente sur une partie de la ligne de partage inférieure de la chambre à combustible et de gazéification (1),
• les ouvertures (4) pour l'amenée d'air primaire sont disposées dans une zone de 0,4 à 0,6 de la hauteur maximale de la chambre à combustible et de gazéification (1) au-dessus de la grille (2),
• dans la zone au-dessous de la grille (2), un brûleur (5) en forme de fente, dont la longueur correspond à peu près à la longueur de la grille (2), réalise la liaison avec la chambre de combustion (6),
• la chambre de combustion (6) est divisée par une paroi (9) en une chambre de précombustion et de mélange (7), une chambre de postcombustion (8) située au-dessous de la précédente avec chacune une section transversale réniforme et deux chambres de renversement et de postcombustion, la section transversale des deux chambres (7) et (8) s'agrandissant de façon continue dans le sens de l'écoulement,
• le réchauffeur d'air (11) pour l'air secondaire débouche sur la chambre de précombustion et de mélange (7).

2. Chaudière de chauffage selon revendication 1, caractérisée en ce que la chambre à combustible et de gazéification (1) est composée de deux tôles dont la courbure va de la forme de segment de cercle à celle de la parabole, avec des rayons/pentes différents, dont les extrémités sont reliées l'une à l'autre, et de faces avant et arrière plates.

3. Chaudière de chauffage selon les revendications 1 et 2, caractérisée en ce que la chambre à combustible et de gazéification (1) est composée d'une section de tuyau façonnée en élipse et de faces avant et arrière plates.

4. Chaudière de chauffage selon les revendications 1 à 3, caractérisée en ce que dans une zone de 0,4 à 0,6 de la hauteur maximale de la chambre à combustible et de gazéification (1) au-dessus de la grille (2) et parallèlement à celle-ci, un canal (15) est aménagé sur les deux côtés de la paroi interne de la chaudière avec une série d'ouvertures (4) pour l'air primaire de combustion.

5. Chaudière de chauffage selon les revendications 1 à 4, caractérisée en ce que la chambre de combustion (6) est composée d'un ou de plusieurs sections de tuyau (19) en béton réfractaire ou en autre matériau réfractaire qui sont intégrées dans un tuyau d'acier.

6. Chaudière de chauffage selon revendication 5, caractérisée en ce qu'un passage de paroi en forme de fente, parallèle à l'axe, a été réalisé comme brûleur (5) dans une section de tuyau (19) au-dessous de la grille.

7. Chaudière de chauffage selon les revendications 1 à 6, caractérisée en ce que dans la zone entre l'une des chambres de renversement et de postcombustion (10.2) et la chambre de précombustion et de mélange (7) est disposé un réchauffeur d'air (11) dans lequel est réchauffé l'air secondaire amené par au moins une prise d'air (12) et depuis lequel l'air secondaire est amené dans la chambre de précombustion et de mélange (7) par au moins une percée de sortie d'air (16).

8. Chaudière de chauffage selon les revendications 1 à 7, caractérisée en ce qu'en face de la chambre de combustion (6), dans le boîtier, est disposée une porte (13) dont la face arrière constitue une paroi de l'une des chambres de renversement et de postcombustion (10.1).

9. Chaudière de chauffage selon les revendications 1 à 8, caractérisée en ce que l'ouverture de la porte d'alimentation (14) peut être recouverte jusqu'au tiers par un clapet (20) pivotant en forme de croissant.

10. Chaudière de chauffage selon les revendications 5 à 9, caractérisée en ce qu'entre les sections de tuyau (19) et le tuyau d'acier est disposée une couche calorifuge (24) qui empêche le refroidissement de la chambre de combustion (6) et l'apparition de tensions thermiques nuisibles dans la chambre de combustion (6) et dans le corps d'acier.

11. Chaudière de chauffage selon les revendications 1 à 10, caractérisée en ce que la grille (2) s'étend sous forme de fente sur environ 1/5 à 1/3 de la longueur et au centre de la ligne de partage inférieure de la chambre à combustible et de gazéification (1).
